# EUROPÄISCHE PATENTSCHRIFT

(11) **EP 2 126 315 B1**
(45) Veröffentlichungstag und Bekanntmachung des Hinweises auf die Patenterteilung: **02.06.2010**
(21) Anmeldenummer: 08735537.6
(22) Anmeldetag: 27.03.2008
(51) Int. Cl.: F02C 6/12, F01N 13/18, F02B 77/11, F01D 25/24

(54) **GEHÄUSEISOLATION**
HOUSING INSULATOR
ISOLATION DE BOÎTIERS

(30) Priorität: 27.03.2007 EP 07104980
(43) Veröffentlichungstag der Anmeldung: 02.12.2009
(73) Patentinhaber: ABB Turbo Systems AG, 5400 Baden (CH)
(72) Erfinder: SCHÖNBÄCHLER, Fabian, 8037 Zürich (CH); JARUSEL, Matthias, 79774 Albbruck (DE); RUBIN, Sabine, 8008 Zürich (CH)
(74) Vertreter: ABB Patent Attorneys
(86) Internationale Anmeldenummer: PCT/EP2008/053683
(87) Internationale Veröffentlichungsnummer: WO 2008/116922

(56) Entgegenhaltungen:
- DE-A1-102004 010 232
- DE-A1-102004 039 477
- FR-A- 2 677 705

## Beschreibung

### Technisches Gebiet

Die Erfindung bezieht sich auf das Gebiet der Abgasturbolader für aufgeladene Brennkraftmaschinen. Sie betrifft die Gehäuseisolation der Turbine.

### Stand der Technik

Abgasturbolader werden zur Leistungssteigerung von Brennkraftmaschinen, insbesondere Hubkolbenmotoren, eingesetzt. Dabei besitzt ein Abgasturbolader üblicherweise einen Radialverdichter und eine Radial- oder Axialturbine. Mit Abgasen von Brennkraftmaschinen beaufschlagte Abgasturbinen können auch als Nutzturbine eingesetzt werden, wobei anstelle eines Verdichters ein elektrischer Generator oder eine andere Nutzmaschine über die Turbinenwelle angetrieben wird.

Um die Sicherheit von Mensch und Maschine im Bereich um die Brennkraftmaschine zu gewährleisten, gelten für viele Anwendungsbereichen Vorschriften, gemäss denen heisse Bauteile thermisch isoliert sein müssen.

Um das turbinenseitige Gaseintrittsgehäuse von dem Gasaustrittgehäuse zu trennen, muss bei herkömmlich isolierten Abgasturbinen die Gaseintrittsgehäuseisolation vorgängig vollständig entfernt werden. Bei sehr grossen Turboladern, etwa für grosse Zweitakt-Motoren, sind die Teile der Gaseintrittsgehäuseisolation so sperrig und schwer, dass diese Arbeiten einen signifikanten Teil der Servicezeit beanspruchen.
DE 102004039477 offenbart eine Turbinengehäuseverbindung nach dem Oberbegriff von Anspruch 1.

### Kurze Darstellung der Erfindung

Es ist daher Aufgabe der vorliegenden Erfindung, die Gaseintrittsgehäuseisolation derart zu verbessern, dass eine Demontage des Gaseintrittsgehäuses ohne vorgängiges, vollständiges Demontieren der Isolation möglich ist.

Damit die Schrauben, welche das Gaseintrittsgehäuse mit dem Gasaustrittsgehäuse verbinden zugänglich sind, brauchen erfindungsgemäss nur ein Übergangsring, welcher ein- oder mehrteilig ausgebildet sein kann, und die vom Übergangsring radial umfassten Isolationsteile entfernt zu werden. Die Isolation um den Gaseintrittsgehäusestutzen muss hingegen nicht demontiert werden.

Dieser Übergangsring zwischen dem Gasaustrittsgehäuse und dem Gaseintrittsgehäuse kann vieleckig oder rund ausgebildet sein.

Er kann ein- oder beidseitig auf Ringen (Stütz-Ringen) abgestützt werden, welche ihrerseits am Gaseintritts- respektive Gasaustrittsgehäuse befestigt sind und ebenfalls mehrteilig sein können. Diese (Stütz-) Ringe können auch zur Befestigung der benachbarten Gaseintrittsgehäuseisolationsteile dienen.

### Kurze Beschreibung der Zeichnungen

Nachfolgend wird eine Ausführungsform der Erfindung anhand von Zeichnungen detailliert erläutert. Hierbei zeigt
- Fig. 1: einen Abgasturbolader mit einer Gaseintrittsgehäuseisolation einem und erfindungsgemässem Übergangsring zwischen dieser Isolation und dem Gasaustrittsgehäuse, und
- Fig.2: den Abgasturbolader nach Fig. 1 mit demontiertem, zweiteiligem Übergangsring und demontierter Gaseintrittsgehäuseisolation.

### Weg zur Ausführung der Erfindung

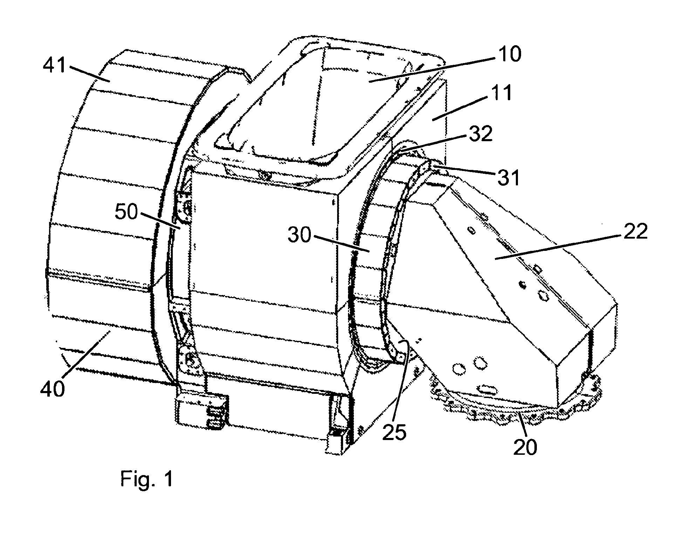

Fig. 1 zeigt einen Abgasturbolader mit den drei wesentlichen Gehäuseteilen: dem Verdichtergehäuse 40, dem Lagergehäuse 50 und dem in Gaseintrittsgehäuse 20 und Gasaustrittsgehäuse 10 unterteilten Turbinengehäuse. Das Verdichtergehäuse 40 ist von einer Verdichtergehäuseisolation 40 umgeben. Das Gaseintrittsgehäuse 20, welches die heissen Abgase von den Brennkammern des Verbrennungsmotors auf die Laufschaufeln der Abgasturbine führt, ist von einer typischerweise mehrteiligen Gaseintrittsgehäuseisolation 22 umgeben. Das Gasaustrittsgehäuse 10 ist von einer Gasaustrittsgehäuseisolation 11 umgeben. Zwischen der Gaseintrittsgehäuseisolation 22 und der Gasaustrittsgehäuseisolation 11 ist erfindungsgemäss ein Übergangsring 30 angeordnet.

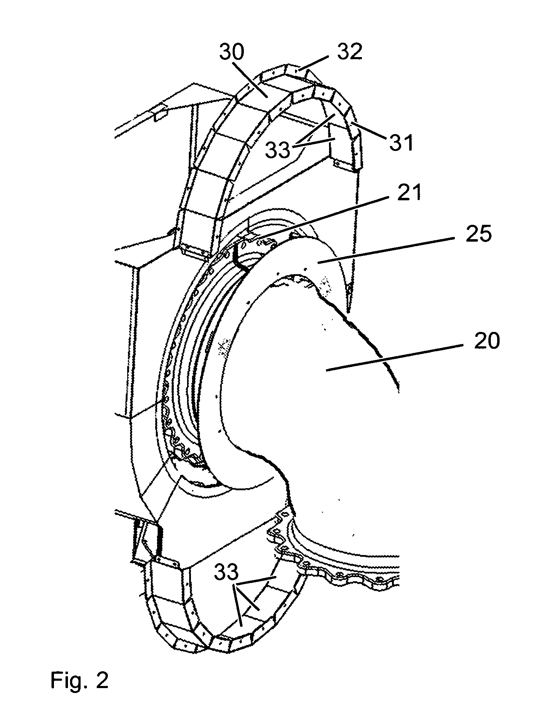

Fig. 2 zeigt die Turbinenseite des Abgasturboladers nach Fig. 1 mit demontierter Gaseintrittsgehäuseisolation 22. Der Übergangsring 30 ist in der dargestellten Ausführungsform zweiteilig ausgebildet. Optional kann der Übergansring auch einteilig oder mehr als zweiteilig ausgebildet sein. Bei einer einteiligen Ausbildung ist zur vereinfachten Montage/Demontage im Umfang eine Unterbrechung eingelassen, so dass der Übergangsring geöffnet und über den Gaseintrittsgehäusestutzen 20 gestülpt werden kann.

Zur Befestigung des Übergangsrings 30 an den benachbarten Gehäuseteilen sind optional Stützringe 25 vorgesehen. Die Stützringe, es kann auch nur ein einzelner Stützring sein, weisen vorteilhafterweise entlang dem Umfang verteilte Bohrungen zur Aufnahme von Befestigungsschrauben auf, mit denen der Übergangsring und/ oder die angrenzenden Isolationselemente 11 bzw. 22 befestigt werden können.

Anstelle eines umlaufenden Stützringes können auch einzelne Stützringsegmente vorgesehen sein. Alternativ kann der Übergangsring direkt an den benachbarten Gaseintrittsgehäuseisolationen befestigt werden.

Wie den Figuren entnommen werden kann, weist der Übergangsring 30 Befestigungselemente 31 und 32 auf, welche an den jeweiligen axialen Enden des Übergangsrings 30 nach radial innen bzw. aussen ragen und die ebenfalls Bohrungen zur Aufnahme von Befestigungsschrauben aufweisen.

Der Übergangsring 30 ist aus Blech gefertigt und rund oder vieleckig ausgebildet. Der Übergangsring 30 umfasst radial innenliegende Isolationselemente 33, welche den Übergangsbereich zwischen der Gaseintrittsgehäuseisolation 22 und der Gasaustrittsgehäuseisolation 11 isolieren. Die Isolationselemente können als zusammenhängender Ring, als Teilringsegmente oder als Einzelelemente ausgebildet sein. Sie können in den Übergangsring 30 geklebt oder auf andere weise an ihm befestig sein.

Der Übergangsring 30 gibt erfindungsgemäss den Befestigungsbereich zwischen dem Gaseintrittsgehäuse 20 und dem Gasaustrittsgehäuse 10 frei, sobald er entfernt worden ist. Damit können die Befestigungsschrauben im Bereich des Befestigungsflansches 21 gelöst werden, ohne dass zuvor die Isolation 22 des Gaseintrittsgehäuses entfernt werden muss. In der Fig. 2 ist die Gaseintrittsgehäuseisolation 22 lediglich entfernt worden, um die Ansicht auf das Gaseintrittsgehäuse 20 sowie den Stützring 25 freizugeben.

### Bezugszeichenliste

- 10: Gasaustrittsgehäuse
- 11: Gasaustrittsgehäuseisolation
- 20: Gaseintrittsgehäuse
- 21: Befestigungsflansch
- 22: Gaseintrittsgehäuseisolation
- 25: Stützring
- 30: Übergangsring
- 31,32: Befestigungselemente
- 33: Isolationselemente
- 40: Verdichtergehäuse
- 41: Verdichtergehäuseisolation
- 50: Lagergehäuse

## Patentansprüche

1. Turbinengehäuseverbindung, umfassend einen Übergang zwischen zwei lösbar miteinander verbundenen Gehäuseteilen (10, 20) sowie Gehäuseisolationen (11, 22), welche die zwei lösbar miteinander verbundenen Gehäuseteilen (10, 20) umschliessen, **dadurch gekennzeichnet, dass** die Turbinengehäuseverbindung eine Gehäuseisolation zur Isolierung des Übergangs umfasst, wobei die Gehäuseisolation zur Isolierung des Übergangs einen Übergangsring (30) umfasst, welcher den Übergang umschliesst und welcher lösbar zwischen den Gehäuseisolationen (11, 22) der zwei lösbar miteinander verbundenen Gehäuseteilen (20, 10) angeordnet ist.

2. Turbinengehäuseverbindung nach Anspruch 1, wobei die zwei Gehäuseteile (10, 20) mit Befestigungsmitteln verbunden sind und der Übergangsring (30) derart zwischen den Gehäuseisolationen (11, 22) der zwei lösbar miteinander verbundenen Gehäuseteilen (20, 10) angeordnet ist, dass er im demontierten Zustand zwischen den Gehäuseisolationen (11, 22) der zwei lösbar miteinander verbundenen Gehäuseteilen (20, 10) den Bereich der Befestigungsmittel freigibt.

3. Turbinengehäuseverbindung nach einem der Ansprüche 1 oder 2, wobei der Übergangsring (30) in Umfangsrichtung in mehrere Teile unterteilt ist.

4. Turbinengehäuseverbindung nach einem der Ansprüche 1 bis 3, wobei der Übergangsring (30) Isolationselemente (33) radial umschliesst.

5. Turbinengehäuseverbindung nach einem der Ansprüche 1 bis 4, wobei der Übergangsring (30) Befestigungselemente (31, 32) umfasst, welche der Befestigung des Übergangsrings (30) an den zwei lösbar miteinander verbundenen Gehäuseteilen (10, 20) und/ oder den Gehäuseisolationen (11, 22) der zwei lösbar miteinander verbundenen Gehäuseteilen (20, 10) dienen.

6. Turbinengehäuseverbindung nach einem der Ansprüche 1 oder 2, wobei ein- oder mehrteilige Stützringe (25) oder Stützringsegmente den Übergangsring (30) und die benachbarten Isolationsteile (22) tragen.

7. Abgasturbine, umfassend ein Gaseintrittsgehäuse (20) und ein Gasaustrittsgehäuse (10), wobei die Verbindung zwischen dem Gaseintrittsgehäuse (20) und dem Gasaustrittsgehäuse (10) gemäss einer Turbinengehäuseverbindung nach einem der vorangehenden Ansprüche ausgebildet ist.

8. Abgasturbolader, umfassend eine Abgasturbine nach Anspruch 7.

## Claims

1. Turbine housing connection, comprising a transition between two releasably interconnected housing parts (10, 20) and also housing insulations (11, 22) which surround the two releasably interconnected housing parts (10, 20), **characterized in that** the turbine housing connection comprises a housing insulation for insulating the transition, the housing insulation for insulating the transition comprising a transition ring (30) which surrounds the transition and which is arranged releasably between the housing insulations (11, 22) of the two releasably interconnected housing parts (20, 10).

2. Turbine housing connection according to Claim 1, the two housing parts (10, 20) being connected by fastening means, and the transition ring (30) being arranged between the housing insulations (11, 22) of the two releasably interconnected housing parts (20, 10) in such a way that the said transition ring, in the demounted state, frees the region of the fastening means between the housing insulations (11, 22) of the two releasably interconnected housing parts (20, 10).

3. Turbine housing connection according to either one of Claims 1 and 2, the transition ring (30) being subdivided in the circumferential direction into a plurality of parts.

4. Turbine housing connection according to one of Claims 1 to 3, the transition ring (30) surrounding insulation elements (33) radially.

5. Turbine housing connection according to one of Claims 1 to 4, the transition ring (30) comprising fastening elements (31, 32) which serve for fastening the transition ring (30) to the two releasably interconnected housing parts (10, 20) and/or to the housing insulations (11, 22) of the two releasably interconnected housing parts (20, 10).

6. Turbine housing connection according to either one of Claims 1 and 2, one-part or multi-part supporting rings (25) or supporting-ring segments carrying the transition ring (30) and the adjacent insulation parts (22).

7. Exhaust gas turbine, comprising a gas inlet housing (20) and a gas outlet housing (10), the connection between the gas inlet housing (20) and the gas outlet housing (10) being designed in the manner of a turbine housing connection according to one of the preceding claims.

8. Exhaust gas turbocharger, comprising an exhaust gas turbine according to Claim 7.

## Revendications

1. Connexion de carter de turbine, comprenant une transition entre deux parties de carter (10, 20) connectées de manière amovible l'une à l'autre, ainsi que des isolations de carter (11, 22) qui entourent les deux parties de carter (10, 20) connectées de manière amovible l'une à l'autre, **caractérisée en ce que** la connexion de carter de turbine présente une isolation de carter pour l'isolation de la transition, l'isolation de carter pour l'isolation de la transition comprenant une bague de transition (30), qui entoure la transition et qui est disposée de manière amovible entre les isolations de carter (11, 22) des deux parties de carter (10, 20) connectées de manière amovible l'une à l'autre.

2. Connexion de carter de turbine selon la revendication 1, dans laquelle les deux parties de carter (10, 20) sont connectées avec des moyens de fixation et la bague de transition (30) est disposée entre les isolations de carter (11, 22) des deux parties de carter (20, 10) connectées de manière amovible l'une à l'autre de telle sorte qu'elle libère, dans l'état démonté, entre les isolations de carter (11, 22) des deux parties de carter (20, 10) connectées de manière amovible l'une à l'autre, la région des moyens de fixation.

3. Connexion de carter de turbine selon la revendication 1 ou 2, dans laquelle la bague de transition (30) est divisée dans la direction périphérique en plusieurs parties.

4. Connexion de carter de turbine selon l'une quelconque des revendications 1 à 3, dans laquelle la bague de transition (30) entoure radialement des éléments d'isolation (33).

5. Connexion de carter de turbine selon l'une quelconque des revendications 1 à 4, dans laquelle la bague de transition (30) comprend des éléments de fixation (31, 32) qui servent à la fixation de la bague de transition (30) aux deux parties de carter (10, 20) connectées de manière amovible l'une à l'autre et/ou aux isolations de carter (11, 22) des deux parties de carter (20, 10) connectées de manière amovible l'une à l'autre.

6. Connexion de carter de turbine selon l'une quelconque des revendications 1 ou 2, dans laquelle des bagues de support (25) en une ou plusieurs parties ou des segments de bagues de support portent la bague de transition (30) et les parties d'isolation adjacentes (22).

7. Turbine à gaz d'échappement, comprenant un carter d'entrée de gaz (20) et un carter de sortie de gaz (10), la connexion entre le carter d'entrée de gaz (20) et le carter de sortie de gaz (10) étant réalisée sous forme de connexion de carter de turbine selon l'une quelconque des revendications précédentes.

8. Turbocompresseur à gaz d'échappement comprenant une turbine à gaz d'échappement selon la revendication 7.
